# EUROPEAN PATENT APPLICATION

(11) **EP 4 592 863 A1**
(43) Date of publication of application: **30.07.2025**
(21) Application number: 25153699.1
(22) Date of filing: 24.01.2025
(51) Int. Cl.: G06F 16/242, G06F 16/2453, G06F 16/901

(54) **INTERACTIVE DEVELOPMENT OF DATABASE QUERIES**

(30) Priority: 25.01.2024 US 202463624948 P; 15.01.2025 US 202519022088
(71) Applicant: Dynatrace LLC, Waltham, MA 02451 (US)
(72) Inventor: HALLAS, Tiit, Waltham (US)
(74) Representative: Bittner, Thomas L.

(57) **Abstract**

A computer-implemented method is presented for querying a database system. The technical problem is to find a method for querying a database system that allows the user to automatically keep track of both queries and results. The problem is solved by a computer-implemented method for querying a database system, comprising: presenting a tree graph on a display of a computer system, where the tree graph represents related queries on the database system; receiving a selection of a given node in the tree graph displayed on the display from a user of the database system; presenting a given query, along with results for the given query, on the display, where the given query is associated with the given node; receiving a modification to the given query from the user of the database system, thereby forming a new query; and updating the tree graph with the new query. (Fig. 1)

## Description

### Field

The present disclosure relates to a computer-implemented method for querying a database system thereby enabling the interactive development of database queries on a database system. In order to monitor the performance of applications or entire computer systems, application monitoring and performance data, short for APM data, documenting the operation of the applications/computer systems, such as log messages/logs, traces, metrics etc. is collected and stored in a database system. Periodically or in case a suspicious activity is detected, the data is queried for remnants of such activities. The investigation of APM data is performed by formulating database queries, executing the queries, and reviewing the results for pieces of suspicious activities. As this may be considered to be a search for a needle in a haystack, the investigation/analysis is highly non-linear and often queries are modified, refined, in case executing the refined query does not bring up the desired results, the original refinement is retracted, and another refinement of the query is tried out.

### Background

When performing investigations or executing queries in log analysis environments, an investigator, e.g., a security investigator, doesn't write perfect queries from scratch: forensic investigation is a non-linear activity that starts from an initial query, then the query is iteratively refined, often parts of the query are deleted or commented out and working bits from a query are copied into a larger query. There is often a need to jump back to not only the previous query, but to a query the investigator executed 5-6 executions ago, in order to see either the query you executed and/or the result set that the investigator got at that time. The iterative refinement of database queries is important to either validate something you discovered earlier, to get some insights for the next query being created currently, or to take another path of investigation from that point. A good example of this is any kind of summarization: Investigators summarize the system based on error codes and continue several investigation paths from this point with different error codes or systems that were shown in the summarization results.

In some cases, investigators want to modify the query they started from and take a different path in the investigation: either to find proof for some other theories or just check something with the follow-up query and then return to the original trail of the investigation. Such movement between queries and previous result sets forms part of working habit of investigators and is currently done through copying intermediate result sets or queries in a separate document or system.

Moving back and forth between historical queries is usually impossible because query history and their results are often not stored (if the investigator hasn't kept them deliberately). Neither is currently a way to understand the query hierarchy or descendance, even if the query history is saved: the investigator only sees the timeline of executed queries, but they're not in the context of the investigation and there is no direct relation between queries besides the sequence of execution. This could be misleading in many cases since most of the investigations are non-linear.

Currently these problems are solved via duplicating the query during an investigation: if an investigator develops a working query and is conscious about his/her activities (e.g., he deliberately wants to modify the query to a new direction or move away from the current theory to later return to this point) he might either copy the query to a new window, a new tab or a segment or store the working query externally (e.g., to a Wiki page, to their script library or a notepad document). This is done manually, and the investigator must proactively plan their investigation and query editing, which is not the case in most investigations: ideas and new investigation paths reveal themselves quite unexpectedly, since investigators are searching for the unknown. Often investigators create queries with logical errors in them: they will continue developing the query with several executions in between and then discover, that a bug has been present in the flow for the past 5 queries already. There is no way of going back to the working query without starting to analyze the query history (if that is present at all in the tool).

Another approach is to store and show the full query history in certain SIEM (Security Information and Event Management) systems and log analytics tools. However, since an investigator might execute queries in a different order, the sequence of queries does not reflect the actual hierarchy of the queries. Thus, these tools do not reflect the full context of the investigation either. Since these tools do not store the query results with them, there is typically no way to see the results at the execution time, as executing the same query days later might give different results.

Currently, there is no adequate solution to manage queries and result sets in context and in hierarchy.

This section provides background information related to the present disclosure which is not necessarily prior art.

### Summary

The disclosure involves creating a tree graph of queries and result sets, which keeps the interactions and connections between executed queries intact. The visual appearance of the tree graph in the navigation pane is somewhat similar to the appearance of branches in software versioning systems (e.g., Git) with the difference, that there is no Main branch nor are the branches expected to be merged later. Quite the opposite is the case: It is expected that branches spread into meaningful investigation paths as they evolve. In a first case, branches will be deleted if they are not relevant. In another case, branches will be exported if they evolve into an incident worth reporting.

The invention automatically persists all executed queries and their respective responses to a tree graph, keeping the connection between "parent" and "child" queries. If the filter criteria for a query are changed, a new descendant / child is created for the parent query and the respective result set is added to it, enabling investigators to visually see how the investigation query evolved over time. The previous result set is kept in the tree to preserve integrity of the investigation. In case a node/query is executed without modifying the filter criteria, the result set is updated with a new results set/data from the database.

Navigating in the tree to another node will enable the investigators to open previous queries with their persisted result sets from the previous executions, without the need to re-execute the query. That saves time and resources for the investigator, pacing up the whole process. In addition, this saves time and resources by avoiding unnecessary querying.

It is possible to select single or multiple nodes or branches of nodes in the query tree for additional actions: an investigator can select one branch (or a set of branches) to remove them from the investigation or choose to keep the selected nodes and remove the rest of the query tree if they are irrelevant. Single tree nodes can be deleted from the middle of the branch if they're not relevant anymore and a selected branch can be persisted for reporting to external systems (e.g. Notebooks) to share findings with stakeholders.

An integral part of the tree is the label view: all distinct labels that are added to the queries in the tree are listed beside the query tree. Clicking on the label will highlight these nodes, which have the selected label attached to it. This enables an investigator to find relevant queries from the tree much faster and visually understand, which nodes are important to follow.

The technical problem is solved by a computer-implemented method for querying a database system, comprising: presenting, by a computer processor, a tree graph on a display of a computer system, where the tree graph represents related queries on the database system; receiving, by the computer processor, a selection of a given node in the tree graph displayed on the display from a user of the database system; presenting, by the computer processor, a given query, along with results for the given query, on the display, where the given query is associated with the given node; receiving, by the computer processor, a modification to the given query from the user of the database system, thereby forming a new query; and updating, by the computer processor, the tree graph with the new query.

In a first step, a computer processor displays a tree graph on a display of a computer system, where the tree graph represents related queries on the database system. At the very beginning of an investigation, the tree graph is empty. After inputting and executing the very first database query, a node representing the query is displayed in the tree graph. After this, the computer processor receives a selection of a given node in the tree graph, e.g., by selecting the given node with a pointing device. For the selected node, the query associated with the given node, along with results for the given query, are displayed. After this, the given query is modified by the user of the database system, thereby forming a new query. Upon executing the new query, the tree graph is updated with the new query.

The disclosure can be preferably used in the context of security investigation by querying APM data in a database. This allows the investigator to identify records of APM data contained in the database for root-cause analysis, identification of security incidents etc. The disclosure is, however, not limited to the field of application performance management.

Generally, each node in the tree graph represents a different query of the database system and edges in the tree graph present relationships between queries.

In order to store and retrieve queries and result sets, for each node in the tree graph, at least an identifier for the query, the query, and results for the query are stored in an auxiliary database. The auxiliary database can be a separate database or can be comprised in the main database.

The identifier, also referred to as unique ID, can be e.g., a UUID, a GUID, an integer variable. or a hash value.

According to a preferred embodiment, the method comprises assigning a hash value as identifier for a particular query, where the hash value is generated by a hash function applied to the particular query.

Upon selecting a particular node in the tree graph displayed on the display, a particular query and results for the particular query are retrieved from the auxiliary database, where the particular node represents the particular query; and the particular query and results for the particular query are displayed on the display.

Preferably, the tree graph, the given query and the results for the given query are concurrently displayed, where the tree graph is displayed in a navigation pane, the given query is displayed in a query pane and the result for the given query are displayed in a results pane. This allows the user to review the status of the query by looking at the display once.

After modifying the given query, a command is given, e.g. by pressing a Run button, to execute the new query in the database system, and the new query is executed accordingly. After executing the query, the results for the new query are presented in the results pane of the display.

In a preferred embodiment, modifying the given query includes appending a search criterion to the given query, executing the new query in relation to the results for the given query, and adding a child node to the tree graph, where the child node representing the new query has a child relationship with a node in the tree graph representing the given query. In this case, the result set for the new query is contained in the result set of the parent query, thus, the query can be executed very quickly. By doing so, the result for the unmodified query is reused for bringing up the results of the modified, i.e., further limited, query. This saves CPU time and reduces memory consumption.

According to an alternative embodiment, the additional filter criterion is added after typing in a so-called "pipe symbol "|", i.e., the additional criterion is executed on the commands on the left-hand side of the pipe symbol.

Alternatively, modifying the given query includes removing or amending a search criterion from the given query, executing the new query, and adding a child node to the tree graph, where the child node representing the new query has a child relationship with a node in the tree graph representing the given query. In this case, the result set for the new query is not necessarily contained in the result set of the parent query.

According to another alternative, modifying the given query includes amending an investigation timeframe for the given query, executing the new query, and updating the node representing the given query in the tree graph. In this case, no child node is generated as the query criteria were not changed and only the investigation timeframe was changed. The new result set and possibly a timestamp are, however, stored in the auxiliary database.

Preferably, updating the tree graph includes adding a child node to the tree graph, where the child node has a child relationship with a node in the tree graph representing the given query. The child relationship is typically shown as an edge between the parent node and the child node.

According to a preferred embodiment, at least one of a label, a tag, a color, and a comment can be added to nodes in the tree graph. Labels, tags, colors and comments for respective nodes are stored in the auxiliary database too.

The technical problem is also solved by a non-transitory computer-readable medium having computer-executable instructions that, upon execution of the instructions by a processor of a computer, cause the computer to: present a tree graph on a display of a computer system, where the tree graph represents related queries on the database system; receive a selection a given node in the tree graph displayed on the display from a user of the database system; present a given query, along with results for the given query, on the display, where the given query is associated with the given node; receive a modification to the given query from the user of the database system, thereby forming a new query; and update the tree graph with the new query.

### Drawings

The drawings described herein are for illustrative purposes only of selected embodiments and not all possible implementations and are not intended to limit the scope of the present disclosure.
- Fig. 1: shows a screenshot of a display of a computer used for the interactive development of database queries,
- Figs. 2-7: show various steps in the interactive development of a database query on a database system.

Corresponding reference numerals indicate corresponding parts throughout the several views of the drawings.

### Detailed description

Example embodiments will now be described more fully with reference to the accompanying drawings.

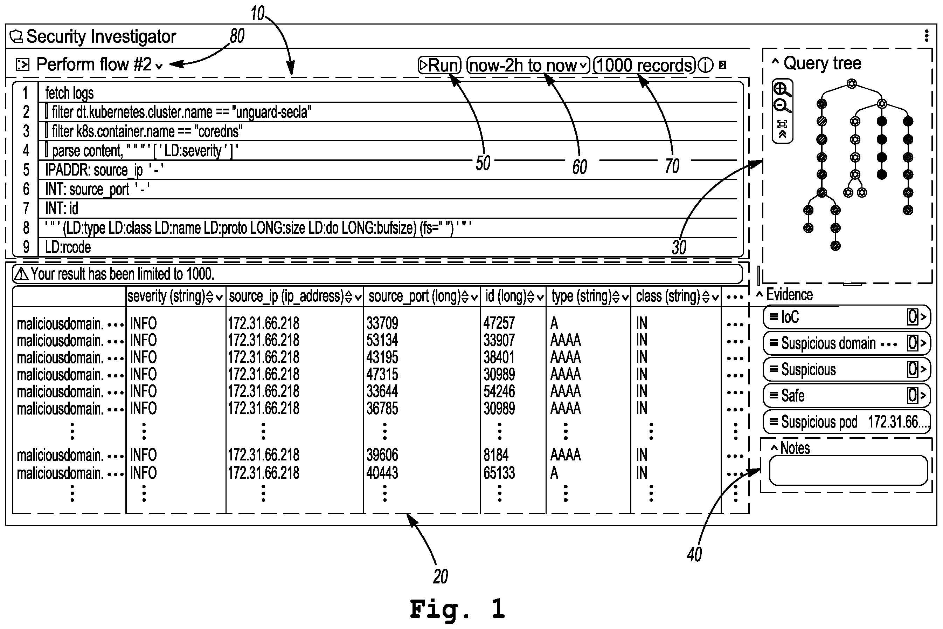

Fig. 1 shows the screen of a computer system used for the interactive development of database queries. The text specifying the database query is input into the query pane 10. After inputting the query or modifying an existing query, the user, e.g., an investigator analyzing a security incident, presses the run button 50 to execute the query. The results from executing the query, i.e., the records from the database system matching the query, are displayed in the results pane 20 on the screen and the number of matching records is displayed in field 70. After displaying the results, the user can review, filter, or sort the records in the results pane 20. By pressing or after pressing the button 50, a unique ID, e.g. a Universal Unique ID, short UUID, or a globally unique identifier, short GUID, is assigned to the query. In case the database records have a temporal dimension, e.g., the data and time a log message, trace or metric was created, the records queried in the database may be limited by setting a timeframe via the input field 60. The timeframe, also referred to as the investigation timeframe, may be set either in a relative way, e.g. "now-2h to now" (meaning that APM data shall be considered starting from the current time "now" minus 2 hours up until now) as displayed in Fig. 1, or in an absolute way, e.g. "2024-01-01 0:00 to 2024-01-02 0:00". For databases storing application performance monitoring (short APM) data, database records typically have a temporal dimension, e.g., a timestamp. In these cases, being able to set an investigation timeframe is beneficial for the analysis can be performed within a certain period of time. This reduces the number of matching records. In addition, the user can focus to find the root cause for a certain suspicious activity identified. For each query, a node or leaf representing the query is displayed in the query tree in the navigation pane 30. If the query was derived from another query, an edge between the node representing the other query, i.e., the original query before amendment, and the node for the modified query is displayed in the navigation pane 30. In addition, the user can add comments or notes to the query in field 40 on the screen. The ID of the query, the ID of the previous query (in case the query is the first query, this ID may be 0), the query itself, the results, the notes and possibly some metadata for the node, such as a color, a tag and/or a label for the node representing the query are stored in an auxiliary database. It is possible that the database containing APM data comprises the auxiliary database too. Typically, entering or modifying the query, adding, editing, or deleting notes and tags etc., and displaying the query, the results and the navigation pane are done by the frontend of a computer/ computing system. The storing of the ID, the query, the results, and metadata for the query take place in the backend of the computer/computing system.

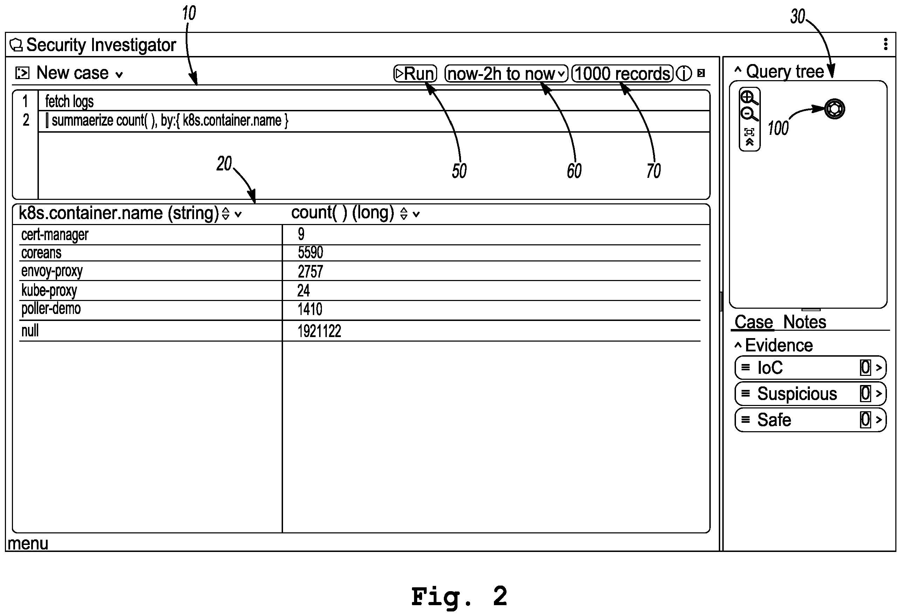

In Figures 2-7 various steps during the interactive development of database queries on a database system are shown.

In Fig. 2, the user, in this case a security investigator, types the query
fetch logs
| summarize count(), by: { k8s.container.name }
into the query pane 10. The disclosure is not limited to a specific query language. In this example, the so-called Dynatrace Query Language, short DQL, see https://docs.dynatrace.com/docs/platform/grail/dynatrace-query-language, is used. The above query queries all logs, groups the logs by the Kubernetes container name and counts the respective logs per container name. This is done to understand which containers are forwarding logs to the database. After finishing the entry of the query, the user presses the run button 50 and executes the query on the database system. After executing the query, the ID 1 is assigned to the query, and the ID, the query, and the results from executing the query are stored in an auxiliary database. In addition, the number of matching database records (see field 70), the results

**Tab. 1 Results from query ID 1**

| **k8s.container.name (string)** | **count() (long)** |
|---|---|
| cert-manager | 9 |
| coredns | 5590 |
| envoy-proxy | 2757 |
| kube -proxy | 24 |
| poller -demo | 1410 |
| Null | 1921122 |

and the respective datatypes, string and long, are displayed in the results pane 20 on the screen. In the navigation pane 30, a leaf or node 100 for the query is displayed. By looking at the result, the user recognizes that 5590 logs originate at the Kubernetes container "coredns". The user intends to investigate the logs from this container in more detail.

After the first step, the auxiliary database contains:

| **Parent ID** | **ID** | **Query** | **Results** |
|---|---|---|---|
| 0 | 1 | fetch logs \| summarize count(), by: { k8s.container.name } | see results pane in Fig. 2 |

Note that the query was executed on a timeframe "now-2h to now" (see input field 60), i.e., records were queried having the timestamp between the date/time minus 2 hours when pressing button 50 to the date/time of execution. Since data may not be timestamped, the input field 60 is optional.

According to a preferred embodiment of the disclosure, the auxiliary database also stores the investigation timeframe, i.e., a first data/time and a second date/time, preferably in an absolute manner. This means that relative timeframes are stored in the database as absolute dates/times.

After inputting and executing the first query, the node 100 in the query pane is automatically selected as the given node.

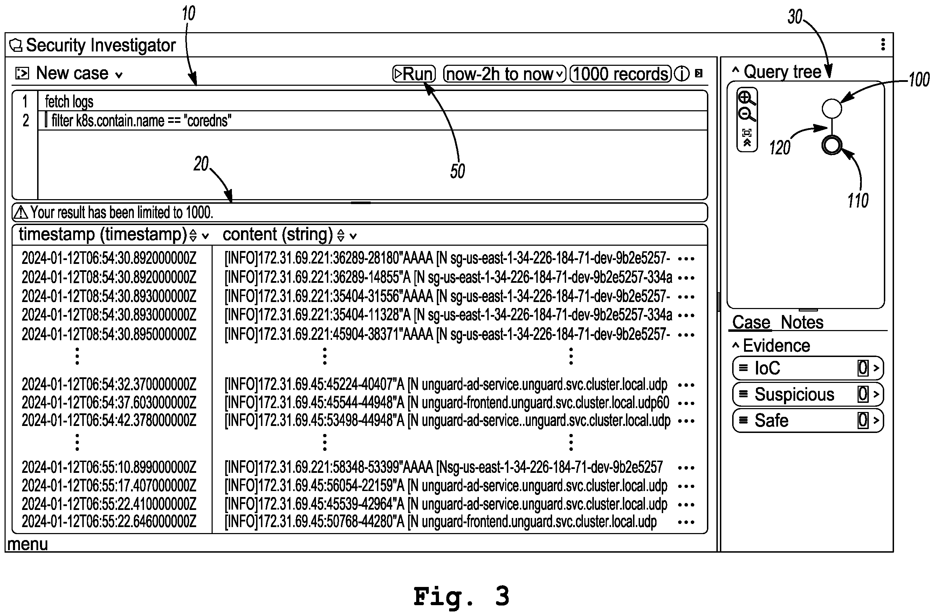

In the next step shown in Fig. 3, the user amends the query in the query pane 10 to
fetch logs
| filter k8s.container.name == "coredns"
and presses the run button 50 to execute the query. To this modified query, the ID 2 is assigned, and the query, the ID, the ID of the parent query, and the results are stored in the auxiliary database. In response to the modified query, the first 1000 matching logs are displayed in the results pane 20 on the screen. In the navigation pane 30, a leaf or node 110 for the amended query, and an edge 120 connecting the leaves 100 and 110 are displayed.

After the second step, the auxiliary database contains:

| Parent ID | ID | Query | Results |
|---|---|---|---|
| 0 | 1 | fetch logs \| summarize count(), by: { k8s.container.name } | see results pane 20 in Fig. 2 |
| 1 | 2 | fetch logs \| filter k8s.container.name == "coredns" | see results pane 20 in Fig. 3 |

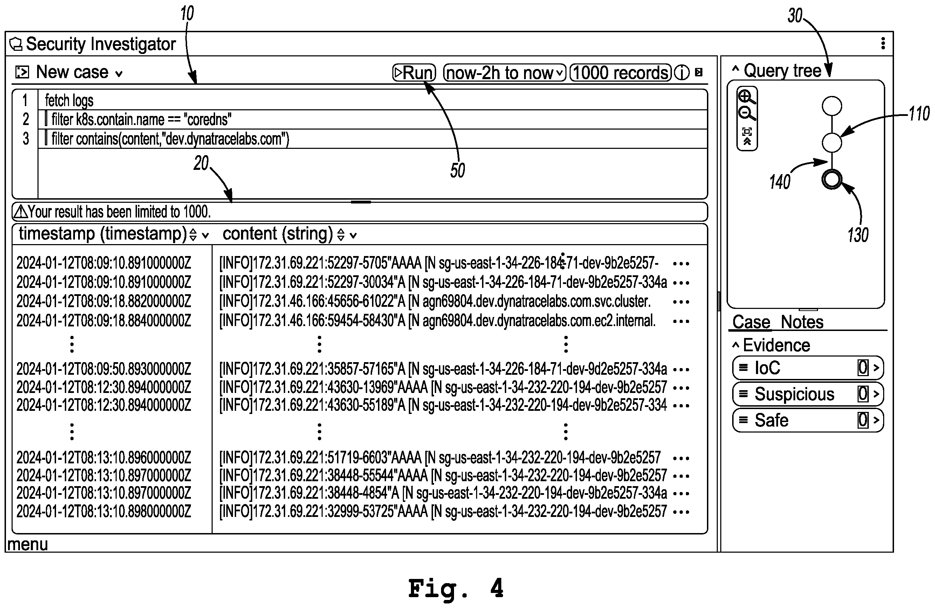

In the next step shown in Fig. 4, the user amends the query in the query pane 10 to
fetch logs
| filter k8s.container.name == "coredns"
| filter contains(content, "dev.dynatracelabs.com")
and presses the run button 50 to execute the query. The ID 3 is assigned to the query. After getting the results from the backend of the computing system, the query, the ID, the ID of the parent query, and the results are stored in the auxiliary database. The auxiliary database contains:

| Parent ID | ID | Query | Results |
|---|---|---|---|
| 0 | 1 | fetch logs \| summarize count(), by: { k8s.container.name } | see results pane 20 in Fig. 2 |
| 1 | 2 | fetch logs \| filter k8s.container.name == "coredns" | see results pane 20 in Fig. 3 |
| 2 | 3 | fetch logs \| filter k8s.container.name == "coredns" \| filter contains(content, "dev.dy-natracelabs.com") | see results pane 20 in Fig. 4 |

In the navigation pane 30, a new leaf or node 130 for the amended query, and an edge 140 connecting the leaves 110 and 130 are displayed.

Alternatively to the above procedure, the query of Fig. 4
fetch logs
| filter k8s.container.name == "coredns"
| filter contains(content, "dev.dynatracelabs.com")
is not executed on the full contents of the database but on the results set of the previous query having ID 2. All other steps remain unchanged. By doing so, the results of the previous query are reused, and query execution is quicker and more efficient.

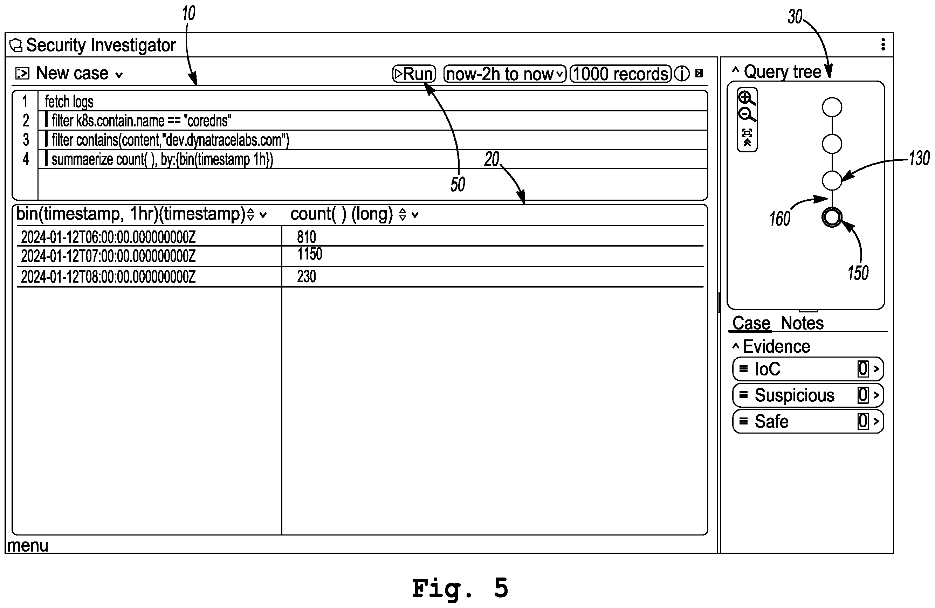

Fig. 5 shows another iteration of query development, where the results of the query are summarized with hourly precision. For that, the query is amended to
fetch logs
| filter k8s.container.name == "coredns"
| filter contains(content, "dev.dynatracelabs.com")
| summarize count(), by: {bin(timestamp, 1h)}

This yields the results shown in the results pane 20 of Fig. 5 and produces yet another node 150 and edge 160 in the navigation pane. After this, the auxiliary database contains:

| Parent ID | ID | Query | Results |
|---|---|---|---|
| 0 | 1 | fetch logs \| summarize count(), by: { k8s.container.name } | see results pane 20 in Fig. 2 |
| 1 | 2 | fetch logs \| filter k8s.container.name == "coredns" | see results pane 20 in Fig. 3 |
| 2 | 3 | fetch logs \| filter k8s.container.name == "coredns" \| filter contains(content, "dev.dy-natracelabs.com") | see results pane 20 in Fig. 4 |
| 3 | 4 | fetch logs \| filter k8s.container.name == "coredns" \| filter contains(content, "dev.dy-natracelabs.com") \| summarize count(), by: {bin(timestamp, 1h)} | see results pane 20 in Fig. 5 |

After this, the user decides to return to the root node and selects the root node 100, e.g., by clicking the node 100 in the navigation pane 30. After selecting the root node 100 having the ID 1, the query and the results are read from the auxiliary database, and the query and the results are displayed in the query pane 10 and results pane 20, respectively. The selected node is 100 highlighted in the navigation pane 30. Subsequently, the user modifies the query by typing
fetch logs
| filter k8s.container.name == "envoy-proxy"

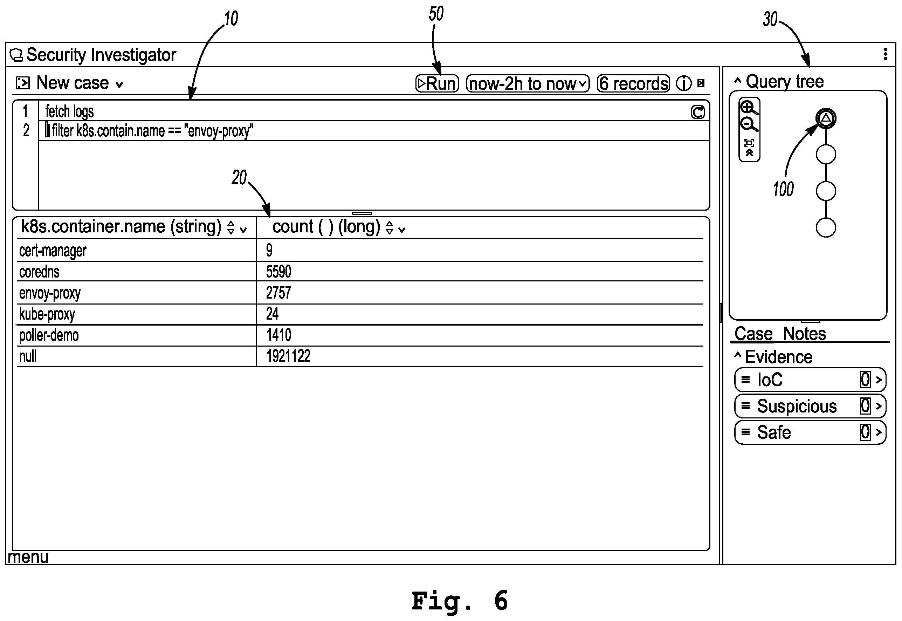

As the user has modified the original query having ID 1, the node 100 in the navigation pane 30 is marked by a triangle indicating a modified query. Fig. 6 shows the screen after modifying the query but before executing it. Thus, the results shown in the results pane 20 still belong to the query ID 1.

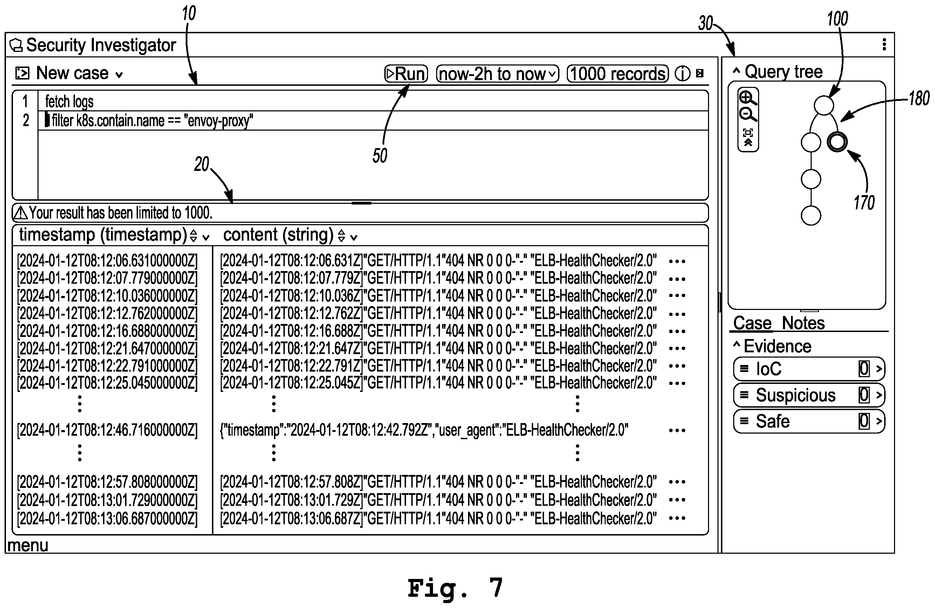

By clicking the run button in Fig. 6, the modified query is assigned to a new ID, ID 5, and the modified query is sent to the backend of the database system for execution. After receiving the results from the backend, the ID of the parent query, the ID, the modified query, and the results are stored in the auxiliary database. In addition, the results from executing the modified query are shown in the results pan of Fig. 7 and a new node 170 and an edge 180 between the root node 100 and the new node 170 is displayed. After execution, the auxiliary database comprises:

| Parent ID | ID | Query | Results |
|---|---|---|---|
| 0 | 1 | fetch logs \| summarize count(), by: { k8s.container.name } | see results pane 20 in Fig. 2 |
| 1 | 2 | fetch logs \| filter k8s.container.name == "coredns" | see results pane 20 in Fig. 3 |
| 2 | 3 | fetch logs \| filter k8s.container.name == "coredns" \| filter contains(content, "dev.dy-natracelabs.com") | see results pane 20 in Fig. 4 |
| 3 | 4 | fetch logs \| filter k8s.container.name == "coredns" \| filter contains(content, "dev.dy-natracelabs.com") \| summarize count(), by: {bin(timestamp, 1h)} | see results pane 20 in Fig. 5 |
| 1 | 5 | fetch logs \| filter k8s.container.name == "envoy-proxy" | see results pane 20 in Fig. 7 |

For brevity, the tables showing the contents of the auxiliary database do not show the results from executing the respective queries. Instead, a reference to the figure is given.

If the user wants to create a new branch of the investigation, the user selects a node where he/she wants to branch off first. Upon clicking the node, the query for the clicked node and the result set are displayed on the screen. After modifying the filter criteria in the query pane 10 and executing the query by pressing the Run button 50, a new node branching off from the selected node is displayed in the navigation pane 30. The results from executing the modified query are displayed in the results pane 20.

The disclosure allows database users, especially security analysts/investigators, to
keep investigation query history as a hierarchy,
enable users to navigate between all queries and results,
give users a visual overview about the executed queries,
enable users "query branching" for parallel investigation paths,
never lose the "last working query" because of the investigation flow,
automatically document the Investigation.

In addition, users can
spread the investigation to parallel branches to divide context,
have unlimited parallel branches,
users can highlight nodes and branches with custom colors, and
add labels to nodes to find queries of particular relevance faster.

After finishing an investigation, the user can
export single or multiple nodes, single or multiple branches or the entire investigation to a notebooks as sections,
remove a branch from the investigation, thereby leaving all other nodes unchanged, and save the removed branch in a separate query tree document.

In addition to saving the ID of the parent node, the ID, the query, and the results in an auxiliary database, the title of the investigation, the date of creation, the name of the author, and a summary of the investigation can be stored in the database.

In case the records in the database, e.g., logs, traces, and metrics, have a temporal dimension, e.g. date and time a log message was created, it makes sense to also store the timeframe of the query in the auxiliary database.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware, or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A computer-implemented method for querying a database system, comprising:
- presenting, by a computer processor, a tree graph on a display of a computer system, where the tree graph represents related queries on the database system;
- receiving, by the computer processor, a selection of a given node in the tree graph displayed on the display from a user of the database system;
- presenting, by the computer processor, a given query, along with results for the given query, on the display, where the given query is associated with the given node;
- receiving, by the computer processor, a modification to the given query from the user of the database system, thereby forming a new query; and
- updating, by the computer processor, the tree graph with the new query.

2. The method of claim 1, wherein each node in the tree graph represents a different query of the database system and edges in the tree graph present relationships between queries.

3. The method of claim 1 or 2 further comprises, for each node in the tree graph, storing an identifier for the query, the query, and results for the query in an auxiliary database.

4. The method of claim 3 further comprises assigning a hash value as the identifier for a particular query, where the hash value is generated by a hash function applied to the particular query.

5. The method of claim 3 or 4, wherein selecting a particular node in the tree graph displayed on the display includes retrieving a particular query and results for the particular query from the auxiliary database in response to the selection of the particular node, where the particular node represents the particular query; and displaying the particular query and results for the particular query on the display in response to the selection of the particular node.

6. The method of any one of the preceding claims further comprises presenting the tree graph, the given query and the results for the given query concurrently on the display, such that the tree graph is displayed in a navigation pane, the given query is displayed in a query pane and the result for the given query are displayed in a results pane.

7. The method of claim 6, wherein receiving a modification to the given query includes a command to execute the new query in the database system, and further comprises executing the new query in accordance with the command and presenting results for the new query in the results pane of the display.

8. The method of claim 7, wherein receiving a modification to the given query includes appending a search criterion to the given query, executing the new query in relation to the results for the given query, and adding a child node to the tree graph, where the child node representing the new query has a child relationship with a node in the tree graph representing the given query.

9. The method of claim 7 or 8, wherein receiving a modification to the given query includes removing or amending a search criterion from the given query, executing the new query, and adding a child node to the tree graph, where the child node representing the new query has a child relationship with a node in the tree graph representing the given query.

10. The method of any one of claims 7 to 9, wherein receiving a modification to the given query comprises amending an investigation timeframe for the given query, executing the new query, and updating the node representing the given query in the tree graph.

11. The method of any one of the preceding claims, wherein updating the tree graph includes adding a child node to the tree graph, where the child node has a child relationship with a node in the tree graph representing the given query.

12. The method of any one of the preceding claims further comprises adding at least one of a label, a tag, a color, and a comment to one or multiple nodes in the tree graph.

13. A non-transitory computer-readable medium having computer-executable instructions that, upon execution of the instructions by a processor of a computer, cause the computer to:
- present a tree graph on a display of a computer system, where the tree graph represents related queries on the database system;
- receive a selection a given node in the tree graph displayed on the display from a user of the database system;
- present a given query, along with results for the given query, on the display, where the given query is associated with the given node;
- receive a modification to the given query from the user of the database system, thereby forming a new query; and
- update the tree graph with the new query.
